Europäisches Patentamt

European Patent Office

Office européen des brevets

(11) Publication number: **0 483 894 A1**

## EUROPEAN PATENT APPLICATION

(21) Application number: **91202600.2**

(22) Date of filing: **05.10.91**

(51) Int. Cl.5: **B60L 11/18**, H02P 6/02

(30) Priority: **29.10.90 US 604313**

(43) Date of publication of application:
**06.05.92 Bulletin 92/19**

(84) Designated Contracting States:
**CH DE DK LI**

(71) Applicant: **GENERAL MOTORS CORPORATION**
**General Motors Building 3044 West Grand Boulevard**
**Detroit Michigan 48202(US)**

(72) Inventor: **Reynolds, Michael George**
**4228 Lin Drive**
**Sterling Heights, MI 48310(US)**
Inventor: **Namuduri, Chandra Sekhar**
**34542 Coastal Drive**
**Sterling Heights, MI 48310(US)**

(74) Representative: **Haines, Arthur Donald et al**
**Patent Section 1st Floor Gideon House 28 Chapel Street**
**Luton, Bedfordshire LU1 2SE(GB)**

(54) **Motor control system.**

(57) A pulse-width modulated inverter controller (20) for a brushless DC motor in which the controller (20) sets the carrier frequency at one of at least two discrete values, depending on the inverter load. At light and medium loading where the output power and device losses are moderate and the inverter heat sink is adequately large, the carrier frequency is set to a relatively high value. At heavy loading where the inverter losses are relatively high, the carrier frequency is reduced to reduce the switching losses. The controller (20) can be used to reduce the rate of temperature increase in a given inverter design, or alternately, to permit the use of a smaller heat sink for the same rate of temperature increase.

FIG.1

EP 0 483 894 A1

This invention relates to a motor control system and to apparatus for controlling the operation of a switching device adapted to supply alternating current to a load.

Known brushless DC motor controllers generally use an inverter (full-wave or half-wave) for sequentially energizing the stator phase windings of the motor from a DC source. The phase windings are interconnected in a WYE or DELTA configuration, and the inverter comprises a number of semiconductor switches which are alternately rendered conductive and nonconductive effectively to connect and disconnect individual phase windings or winding pairs to the DC source in a predefined pattern. This develops a rotating magnetic stator field for producing synchronous rotation of the permanent magnet rotor.

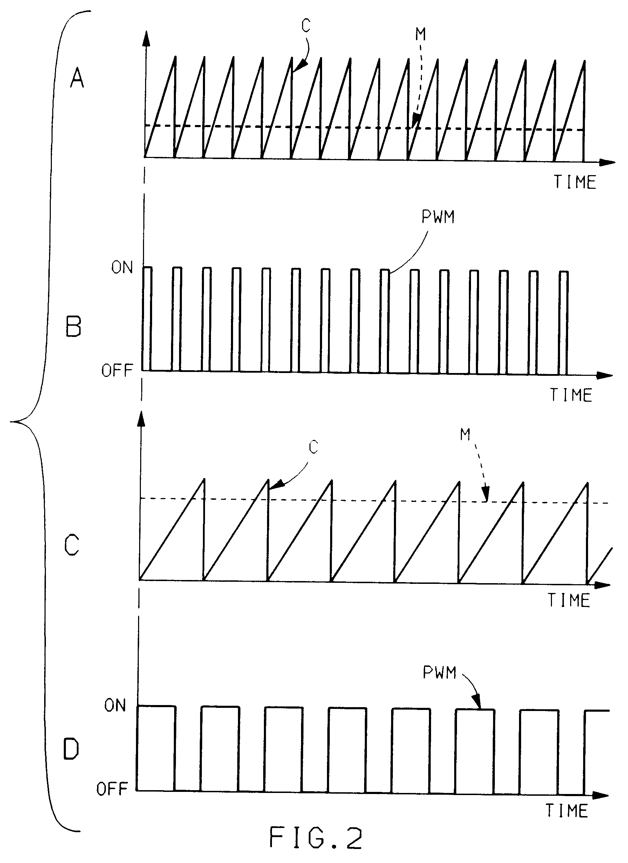

The conduction periods of the inverter switches are often pulse-width-modulated (PWMed) in order to control the average voltage or current supplied to the phase windings. This is commonly achieved by comparing a modulation waveform with a relatively high frequency triangular waveform, referred to as a carrier. The frequency of PWM signal is determined by the carrier wave, and the amplitude of the modulation waveform determines the PWM duty cycle. An example of this sort of PWM control is graphically illustrated in Graphs A and B of Figure 2, where M designates the modulation waveform, C designates the carrier waveform and PWM designates the consequent modulation of the applied voltage.

This PWM causes a few problems, however. If a low frequency carrier wave is chosen, the voltage and current drawn from the source and supplied to the load contains a substantial AC component, generally referred to as ripple. The ripple voltage and current can produce time varying audible noise and can lead to increased heating and degradation of various system components. The worst-case condition generally occurs at a PWM duty cycle of 50%, and filtering can be employed at the input and/or output of the inverter to reduce the ripple at that frequency. If a high frequency carrier wave is chosen, the ripple is lessened, but the inverter switching losses become significant. Switching losses occur at each change in conduction state of an inverter switching device, and therefore increase with increasing frequency. The switching losses are manifested in the form of heat which must be adequately removed by the inverter heat sink to avoid thermal degradation and failure of the inverter components.

The general design practice is to make an engineering trade-off of acceptable ripple and filter size versus heat sink size by selection of an appropriate carrier frequency. Reducing the carrier frequency reduces switching losses and thus decreases the heat sink size, but increases ripple, and possibly creates audible noise. Increasing the carrier frequency has the opposite effect.

The present invention seeks to provide an improved motor control system and improved apparatus for controlling the operation of a switching device adapted to supply alternating current to a load.

According to an aspect of the present invention, there is provided apparatus for controlling the operation of a switching device according to claim 1.

According to another aspect of the present invention, there is provided a motor control system according to claim 3.

The present invention can provide an improved PWM inverter controller for a brushless DC motor, in which the controller sets the carrier frequency at one of at least two discrete values, depending on the inverter load. For example, at light and medium loading where the output power and device losses are moderate and the inverter heat sink is adequately large, the carrier frequency can be set to a relatively high value such as 18 kHz. The filter components can be selected to reduce the input and output ripple to an acceptable level for the worst-case condition, 50% duty cycle. At heavy loading where the inverter losses are relatively high, the carrier frequency is reduced to reduce the switching losses. Since the duty cycle will be high under such conditions, ripple can be much better than the worst-case condition, the filter components advantageously being suitably selected to contain it within acceptable levels. In most applications, the presence of audible noise, if any, can be tolerated under such conditions because it is infrequent and generally short in duration.

In the illustrated embodiment, the inverter is used to operate an electric vehicle traction motor from an on-board DC source, and the motor current command is used as an indication of inverter load. The carrier frequency is set at 18 kHz for current commands less than a reference current, such as 100A, and at 10 kHz for current commands in excess of the reference current. The controller can be used to reduce the rate of temperature increase in a given inverter design, or alternately, to permit the use of a smaller heat sink for the same rate of temperature increase.

An embodiment of the present invention is described below, by way of illustration only, with reference to the accompanying drawings, in which:-

Figure 1 is a system diagram of embodiment of full-wave motor control inverter and controller;

Figure 2 graphs A to D depict the operation of the inverter controller at two different carrier frequencies;

Figure 3 graphs A and B are plots of the motor current at the two different carrier frequencies of Figure 2; and

Figure 4 is a graph of the rise in heat sink temperature over a period of time for the two different carrier frequencies of Figure 2.

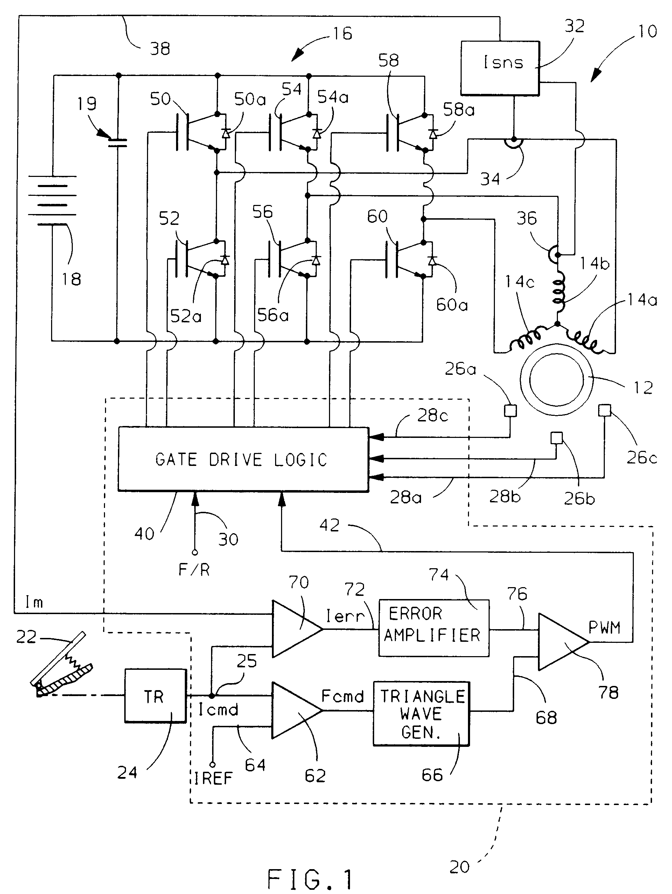

In Figure 1, an embodiment of motor controller is shown fitted to an electrically propelled vehicle. A brushless DC traction motor 10 comprises a permanent magnet rotor 12, and three WYE-connected stator phase windings 14a, 14b and 14c. A full-wave transistor inverter 16 energizes the windings 14a-14c with current from the DC source identified as storage battery 18. A capacitor 19 filters the input of inverter 16 to reduce the battery ripple voltages and currents to within acceptable levels. The capacitor 19 is selected such that its impedance at the inverter switching frequency is lower than that of battery 18. As a result, the ripple frequency component of the current will be alternately absorbed and supplied by capacitor 19, and the DC component of the current will flow through battery 18. This minimizes the battery losses and limits the ripple voltage at its terminals. The chopped voltage applied to the motor windings 14a-14c is filtered by the motor leakage inductance to attenuate the ripple current at the output of inverter 16.

A circuit 20 is provided for controlling the operation of inverter 16 in response to the position of a vehicle accelerator pedal 22, the position of rotor 12, a direction input (F/R) and a measure of the actual motor current. The accelerator position is sensed by a transducer (TR) 24 to yield a current command Icmd on line 25, the rotor position is detected by a set of three hall Effect devices 26a-26c which develop position signals on lines 28a-28c, the direction input F/R is provided on line 30, and the motor current is detected by the current sense (Isns) circuit 32. The Isns circuit 32 includes current sensors 34 and 36 for sensing the current in phase windings 14a and 14b, respectively, and provides an output Im on line 38 representative of the total current supplied to motor 10.

The GATE DRIVE LOGIC circuit 40 of control circuit 20 is responsive to the rotor position information on lines 28a-28c, the direction input F/R on line 30 and a PWM input on line 42, and develops a conduction control signal for each of six insulated gate bipolar power transistors (IGBT) 50-60 connected so as to form the inverter 16. The transistors 50 and 52 connect the phase winding 14a to the storage battery 18; the transistors 54 and 56 connect the phase winding 14b to the storage battery 18; and the transistors 58 and 60 connect the phase winding 14c to the storage battery 18. Additionally, each transistor 50-60 has an oppositely poled diode 50a-60a, commonly referred to as a freewheeling diode. The diodes 50a-60a operate in a well known manner in conjunction with the leakage inductance of the respective motor windings 14a-14c to provide output filtering for the inverter current. The function performed by GATE DRIVE LOGIC circuit 40 is well understood in the art, and may be mechanized with an integrated circuit, such as the MC 33034 Three Phase Brushless Motor Drive Circuit, manufactured by Motorola Inc., Phoenix, Arizona.

Within the control circuit 20, the comparator 62 compares the current command Icmd on line 25 with a reference current IREF on line 64. The reference IREF represents a predefined motor current command (load) below which the carrier frequency is set at a relatively high value to minimize ripple, and above which the carrier frequency is set at a relatively low value to minimize switching losses and heat sink size. The comparator 62 may have hysteresis inputs to prevent hunting in the region of the reference current IREF.

Thus, the output of comparator 62 represents a two-level frequency command Fcmd which in this embodiment is 18 kHz for light to medium current commands, and 10 kHz for heavy current commands. The frequency command of comparator 62 is applied as an input to a TRIANGLE WAVE GENERATOR 66, which develops a fixed amplitude triangle wave carrier signal of the commanded frequency on line 68. This is the waveform C shown in graphs A and C of Figure 2; having the characteristics of graph A in the case of light to medium current commands, and those of graph C in the case of heavy current commands.

The comparator 70 compares the current command signal Icmd on line 25 with the actual motor current signal Im on line 38 to generate a current error signal Ierr on line 72. The current error signal Ierr, in turn, is fed as an input to ERROR AMPLIFIER 74, which develops a variable amplitude DC modulation signal on line 76 in relation to the current error Ierr. This is the waveform M shown in Graphs A and C of Figure 2.

The comparator 78 compares the triangular carrier wave on line 68 with the modulation waveform on line 76 to develop the PWM input for GATE DRIVE LOGIC circuit 40 on line 42. This is the PWM waveform shown in Graphs B and D of Figure 2; and has the characteristics of Graph B in the case of light to medium current commands, and those of Graph D in the case of heavy current commands.

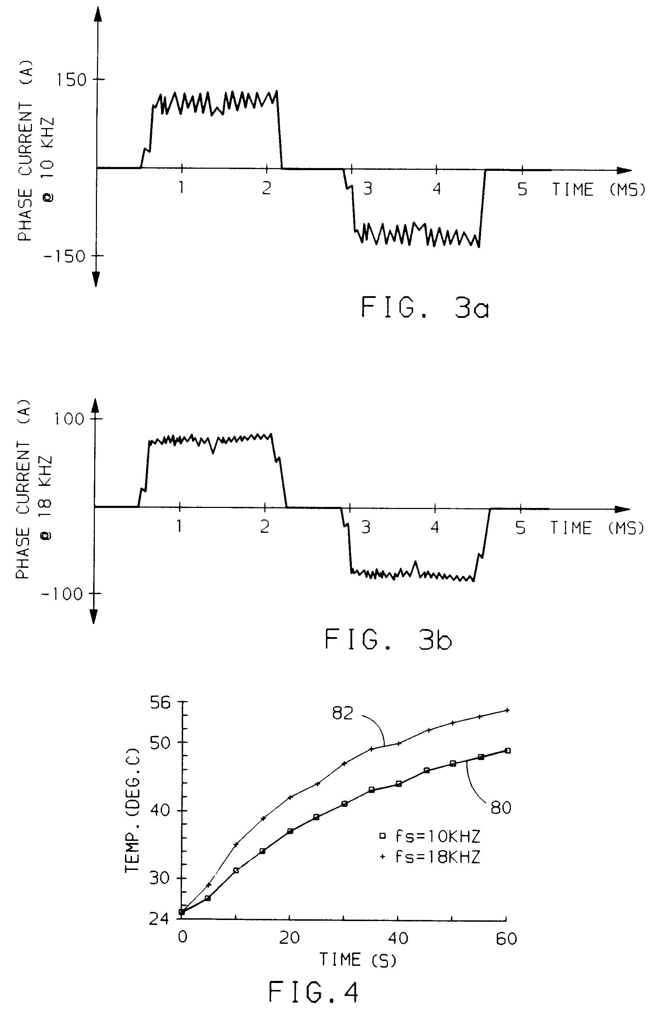

Typical motor phase winding currents achieved with the low and high carrier frequencies are depicted in Figures 3A and 3B, respectively. Thus, Figure 3A represents a heavy current command condition where the low carrier frequency of 10 kHz is used to minimize switching losses, and Figure 3B represents the light to medium current command condition where the high carrier frequency of 18 kHz is used to minimize audible noise and losses associated with ripple. The presence of audible noise during periods of heavy loading can be tolerated because such conditions are generally infrequent and short in duration.

Figure 4 represents the results of a test carried out with the inverter 16 of Figure 1 delivering a load current of 122 A from a 300 V DC source. The trace 80 represents the temperature of the inverter heat sink (in degrees Celsius) over a one-minute interval of operation with a carrier frequency of 18 kHz. The trace 82 represents the heat sink temperature over a similar interval with a carrier frequency of 10 kHz. Significantly, the lower switching losses at 10 kHz contribute to a lower rise in heat sink temperature. From a design standpoint, this means that the inverter heat sink used with this embodiment of controller may be selected for worst-case medium current commands, instead of worst-case heavy current commands, or alternately, the inverter will operate at a lower temperature than would otherwise be expected.

## Claims

1. Apparatus for controlling the operation of a switching device which is adapted to be alternately rendered conductive and non-conductive so as to supply alternating current to a load (10) from a source of direct current (18), comprising command means (22) for generating a current command ($I_{cmd}$) representative of a desired current to be supplied to the load; feedback means (32) for sensing the actual current supplied to the load; a reference signal generator (70,74) adapted to generate a reference signal ($I_{err}$) related to the difference between the current command ($I_{cmd}$) and the actual current; and carrier means (62,66) adapted to develop a substantially fixed magnitude triangular wave (c) for comparison with the reference signal; characterised by a modulator (78,40) adapted to modulate the operation of the switching device (50-60) on the basis of a comparison of the reference signal with the triangular carrier wave; and in that the carrier means (62,66) is adapted to generate a triangular wave (c) having a relatively high frequency when the current command is less than a reference current ($I_{REF}$), and a triangular wave (c) having relatively low frequency when the current command is at least as great as the reference current.

2. Apparatus according to Claim 1, wherein the load is a vehicle traction motor and the current command is determined in relation to a demand signal generated by an operator of the vehicle.

3. A motor control system including a source of direct current (18), an electrical load (10), a transistor inverter (16) connected to supply alternating current to the load from the source of direct current, and a controller (20) for pulse-width-modulating a transistor (50-60) of the inverter between conductive and non-conductive states on the basis of a comparison between a carrier waveform (c) and a modulation waveform (M) determined in relation to a load current command ($I_{cmd}$); characterised in that the controller (20) is adapted to set the frequency of the carrier waveform (c) to a relatively high frequency value when the load current command ($I_{cmd}$) is relatively low, thereby to reduce losses and noise related to ripple in the supplied current, and to a relatively low frequency value when the load current command ($I_{cmd}$) is relatively high, thereby to reduce losses related to the modulation of the transistor.

4. Apparatus according to Claim 3, wherein the load is a vehicle traction motor and the load current command is determined in relation to a demand signal generated by an operator of the vehicle.

FIG.1

FIG.2

FIG. 3a

FIG. 3b

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | PATENT ABSTRACTS OF JAPAN vol. 13, no. 490 (E-841)(3838) 7 November 1989 & JP-A-1 194 871 ( MITSUBISHI ELECTRIC CORP. ) 4 August 1989 | 1,3 | B60L11/18 H02P6/02 |
| Y | * the whole document * | 2,4 | |
| X | PATENT ABSTRACTS OF JAPAN vol. 13, no. 258 (M-838)(3606) 15 June 1989 & JP-A-1 064 504 ( TOYOTA MOTOR CORP. ) 10 March 1989 | 1,3 | |
| Y | * the whole document * | 2,4 | |
| Y | US-A-4 146 825 (HARHAY) 27 March 1979 * abstract * | 2,4 | |
|  | ----- | | TECHNICAL FIELDS SEARCHED (Int. Cl.5 ) |
|  | | | B60L H02P |

The present search report has been drawn up for all claims

| Place of search | Date of completion of the search | Examiner |
|---|---|---|
| THE HAGUE | 20 JANUARY 1992 | BOURBON R. |

EPO FORM 1503 03.82 (P0401)